# EUROPÄISCHE PATENTSCHRIFT

(11) **EP 1 294 223 B1**
(45) Veröffentlichungstag und Bekanntmachung des Hinweises auf die Patenterteilung: **08.02.2006**
(21) Anmeldenummer: 01947273.7
(22) Anmeldetag: 11.05.2001
(51) Int. Cl.: A01J 5/017

(54) **VERFAHREN ZUM BETÄTIGEN EINER TRAG-UND ABZIEHVORRICHTUNG SOWIE EINE TRAG- UND ABZIEHVORRICHTUNG FÜR MELKZEUGE**
METHOD FOR OPERATING A SUPPORTING AND REMOVAL DEVICE AND A SUPPORTING AND REMOVAL DEVICE FOR TEATCUP CLUSTERS
PROCEDE POUR ACTIONNER UN DISPOSITIF DE SUPPORT ET DE RETRAIT POUR FAISCEAUX TRAYEURS, ET DISPOSITIF DE SUPPORT ET DE RETRAIT CORRESPONDANT

(30) Priorität: 21.06.2000 DE 10030408
(43) Veröffentlichungstag der Anmeldung: 26.03.2003
(73) Patentinhaber: WestfaliaSurge GmbH, 59199 Bönen (DE)
(72) Erfinder: BÜCKER, Heinz, 33449 Langenberg-Benteler (DE)
(74) Vertreter: Neumann, Ditmar
(86) Internationale Anmeldenummer: PCT/EP2001/005376
(87) Internationale Veröffentlichungsnummer: WO 2001/097601

(56) Entgegenhaltungen:
- WO-A-96/13150
- DE-C- 3 406 878

## Beschreibung

Der Gegenstand der Erfindung bezieht sich auf ein Verfahren zum Betätigen einer Trag- und Abziehvorrichtung für Melkzeuge sowie auf eine Trag- und Abziehvorrichtung für Melkzeuge als solche.

Durch die DE 34 06 878 C1 ist eine Trag- und Abziehvorrichtung für Melkzeuge bekannt. Diese Trag- und Abziehvorrichtung weist eine stationäre, vertikale Hauptsäule sowie einen Träger zur Halterung des Melkzeugs auf. Der Träger ist entlang einer Längsachse der Hauptsäule bewegbar und um diese verschwenkbar. Innerhalb des Trägers, der als Rohr ausgebildet ist, ist zum Gewichtsausgleich desselben ein Gegengewicht vorgesehen. Unterhalb der Hauptsäule ist ein das Tragrohr umgebendes Klemmstück angeordnet, das in horizontaler Lage die freie Beweglichkeit des Trägers nicht behindert, wobei zwei sich gegenüberliegende Aufhängepunkte des Klemmstücks über ein axial federndes Element und ein axial starres Element einerseits und einen mit einer Kolbenstange versehenen Arbeitszylinder andererseits mit Aufhängepunkten an der Hauptsäule und mit dem an einer Strebe der Hauptsäule vorhandenen Aufhängepunkt verbunden sind. Durch diese Ausgestaltung der Trag- und Abziehvorrichtung wird die Möglichkeit geschaffen, daß der Träger eine kombinierte Senk-/Drehbewegung ausführt, so daß ein Schrägzug auf das Euter der Kuh übertragen wird.

Eine weitere Ausgestaltung einer Trag- und Abziehvorrichtung ist durch die WO 96/13150 bekannt Der Träger dieser Trag- und Abziehvorrichtung ist einschließlich eines horizontalen Auslegers derart durch ein Gegengewicht ausgeglichen, daß der Träger einschließlich des horizontalen Auslegers, an dem das Melkzeug angeordnet ist, einerseits und das Gegengewicht andererseits an je einem Ende eines über eine Rolle geführten Seils aufgehängt sind und somit der Träger und der horizontale Ausleger über einen bestimmten Bereich vertikal frei verschiebbar und horizontal frei drehbar ist. Das am Ausleger aufgehängte Melkzeug wird somit bei einem Positionswechsel der Kuh während des Melkvorgangs ohne Einwirkung nennenswerter Kräfte nachgeführt.

Der Melkvorgang einer Kuh kann in eine Hauptmelkphase und in eine Nachmelkphase unterteilt werden. Während der Nachmelkphase besteht die Gefahr, daß das Melkzeug in Richtung des Euters wandert, so daß es hier zu Beeinträchtigungen der Melkwilligkeit der Kuh kommen kann. Um ein Hochwandern des Melkzeugs zu verhindern, wird auf dieses eine vertikal nach unten gerichtete Kraft ausgeübt. Dies wird nach der WO 96/13150 dadurch erreicht, daß eine Klemmvorrichtung über einen Arbeitszylinder betätigt wird, die in der jeweiligen Position auf das zum Gegengewicht führende Seil reibschlüssig einwirkt. Der Arbeitszylinder ist dabei oberhalb der vertikalen Hauptsäule angeordnet. Die Klemmvorrichtung ist sehr präzise zu fertigen, da durch diese sichergestellt werden muß, daß die Wirkung des Gegengewichts aufgehoben wird. Bei der Klemmvorrichtung handelt es sich um ein Klemmstück, welches eine Durchgangsöffnung aufweist, durch die sich das Seil hindurch erstreckt. Wird das Klemmstück aus einer Ausgangsposition bewegt, so wird das Seil durch die Schrägstellung des Klemmstücks geklemmt. Dies führt zu einer Abnutzung des Seils, wodurch die Standzeit des Seils eingeschränkt wird.

Die überaus zufriedenstellend arbeitende Trag- und Abziehvorrichtung hat jedoch den Nachteil, daß der Serviceaufwand zum Austausch des verschlissenen Seils und der Klemmvorrichtung relativ hoch ist.

Hiervon ausgehend liegt der vorliegenden Erfindung die Zielsetzung zugrunde, ein Verfahren zum Betätigen einer Trag- und Abziehvorrichtung anzugeben, durch welches der Betätigungsaufwand der Trag- und Abziehvorrichtung verringert wird. Ein weiteres Ziel der vorliegenden Erfindung ist, die bekannte Trag-und Abziehvorrichtung so weiter zu bilden, daß diese eine höhere Lebensdauer aufweist.

Diese Ziele werden durch das erfindungsgemäße Verfahren zum Betätigen einer Trag- und Abziehvorrichtung mit den Merkmalen des Anspruchs 1 bzw. durch eine Trag- und Abziehvorrichtung mit den Merkmalen des Anspruchs 6 verwirklicht. Vorteilhafte Weiterbildungen des Verfahrens bzw. der Trag- und Abziehvorrichtung sind Gegenstand der jeweiligen abhängigen Ansprüche.

Das Verfahren zum Betätigen einer Trag- und Abziehvorrichtung für Melkzeuge mit einer stationären, vertikalen Hauptsäule, einem Träger zur Halterung des Melkzeugs, wobei der Träger entlang einer Längsachse der Hauptsäule bewegbar und um diese schwenkbar ist und mit einem Gegengewicht, das mit dem Träger verbunden und in einer zur Bewegungsrichtung des Trägers entgegengesetzten Richtung bewegbar ist, zeichnet sich dadurch aus, daß zum Ansetzen des Melkzeugs auf das Gegengewicht eine nach unten gerichtete Zusatzkraft, während einer Hauptmelkphase auf das Gegengewicht keine Zusatzkraft und wenigstens während einer Nachmelkphase auf das Gegengewicht eine nach oben gerichtete Zusatzkraft einwirkt. Dadurch, daß zum Ansetzen des Melkzeugs auf das Gegengewicht eine nach unten gerichtete Zusatzkraft einwirkt, wird die Handhabung des Melkzeugs erleichtert, da für den Melker, der das Melkzeug an den Zitzen des Tieres ansetzt, der Kraftaufwand zum Anheben des Melkzeugs samt Träger verringert wird.

Während der Hauptmelkphase findet keine Krafteinwirkung durch zusätzliche Kräfte auf das Gegengewicht statt. Hierdurch wird die Möglichkeit eröffnet, daß bei einer Bewegung des Tieres mit angesetztem Melkzeug, der Träger dieser Bewegung folgen kann, ohne daß Kräfte, insbesondere Zugkräfte, vom Melkzeug auf das Euter einwirken.

Um zu verhindern, daß während einer Nachmelkphase die Melkbecher des Melkzeugs die Zitzen hochwandern, wird auf das Gegengewicht eine nach oben gerichtete Zusatzkraft aufgebracht. Hierdurch erfolgt eine Bewegung des Trägers nach unten, so daß eine Zugkraft auf das Melkzeug ausgeübt wird, die verhindert, daß die Melkbecher auf den Zitzen in Richtung des Euters des Tieres wandern.

Gemäß einer vorteilhaften Weiterbildung des Verfahrens wird vorgeschlagen, daß die nach unten und/oder nach oben gerichtete Kraft durch die Einwirkung wenigstens eines pneumatisch betätigbaren Kolbens erzeugt wird. Durch diese Verfahrensführung kann die Kraft, die auf das Gegengewicht einwirkt, relativ genau eingestellt werden. Die Krafteinwirkung kann auch tierindividuell eingestellt werden, wenn das Tier und die Trag- und Abziehvorrichtung mit einer entsprechenden Erkennungseinnichtung ausgestattet sind. Die Anwendung eines pneumatisch betätigbaren Kolbens hat auch den Vorteil, daß auf ein bestehendes Luftdrucksystem der Melkanlage zurückgegriffen werden kann.

Zur Vereinfachung der Verfahrensführung wird vorgeschlagen, daß die nach unten gerichtete Kraft durch die Einwirkung eines oberen pneumatisch betätigbaren Kolbens und die nach oben gerichtete Kraft durch die Einwirkung eines unteren pneumatisch betätigbaren Kolbens erzeugt wird. Bevorzugt ist hierbei eine Ausgestaltung des Verfahrens, bei der der obere Kolben und der untere Kolben unabhängig voneinander betätigbar sind.

Nach einer noch weiteren vorteilhaften Ausgestaltung des Verfahrens wird vorgeschlagen, daß der obere Kolben in eine obere Endposition und der untere Kolben in eine untere Endposition verfahrbar sind, so daß in den Endpositionen das Gegengewicht wirkverbindungsfrei mit dem Kolben ist. In dieser Stellung der Kolben wirkt keine Zusatzkraft auf das Gegengewicht. Das Gegengewicht kann im wesentlichen reibungsfrei innerhalb einer Kammer, in der das Gegengewicht angeordnet ist, bewegt werden.

Die auf das Gegengewicht einwirkenden Zusatzkräfte können hinsichtlich Größe und/oder Wirkdauer unterschiedlich sein. Bevorzugt ist jedoch eine Verfahrensführung, bei der im wesentlichen mit einer konstanten Kraft auf das Gegengewicht eingewirkt wird. Die Dauer der Einwirkung der Zusatzkraft kann durch entsprechende Vorgaben eingestellt werden. Sie kann auch variieren. Die Variation der Dauer der Einwirkung der Kräfte ist auch abhängig, von dem zu melkenden Tier. Die Trag- und Abziehvorrichtung kann mit zusätzlichen Sensoren oder Schaltern versehen sein, so daß die Krafteinwirkung auf das Gegengewicht durch den Melker ausgelöst wird. Diese kann dann nach erfolgter Anlegung des Melkzeugs an die Zitzen des Euters aufgehoben werden, so daß ein weiterer Verfahrensablauf gestartet wird.

Gemäß einem weiteren erfinderischen Gedanken wird eine Trag- und Abziehvorrichtung für Melkzeuge mit einer stationären, vertikalen Hauptsäule, einem Träger zur Halterung des Melkzeugs, wobei der Träger entlang einer Längsachse der Hauptsäule bewegbar und um diese verschwenkbar ist und mit einem Gegengewicht, das mit dem Träger verbunden und mit einer zur Bewegungsrichtung des Trägers entgegengesetzten Richtung bewegbar ist, vorgeschlagen, wobei eine Kammer vorgesehen ist, die einen oberen, einen unteren und einen zwischen dem oberen und dem unteren liegenden Fluidanschluß aufweist. In der Kammer ist das Gegengewicht angeordnet. Dieses ist so angeordnet, daß oberhalb des Gegengewichtes ein oberer Kolben und unterhalb des Gegengewichts ein unterer Kolben vorgesehen ist. Die Trag- und Abziehvorrichtung weist eine Steuereinheit zur Steuerung eines Fluiddrucks in der Kammer auf. Durch diese erfindungsgemäße Ausgestaltung der Trag- und Abziehvorrichtung wird erreicht, daß diese einen relativ kompakten Aufbau hat. Ein weiterer Vorzug der erfindungsgemäßen Trag-und Abziehvorrichtung besteht darin, daß im Gegensatz zu der Trag- und Abziehvorrichtung nach der WO 96/13150 kein Verschleiß eines Seils eintritt.

Nach einer vorteilhaften Ausgestaltung der erfindungsgemäßen Trag- und Abziehvorrichtung wird vorgeschlagen, daß ein flexibles Verbindungselement, bei dem es sich beispielsweise um ein Seil handeln kann, vorgesehen ist, das das Gegengewicht mit dem Träger verbindet. Das Verbindungselement erstreckt sich durch einen Kanal im Deckel der Kammer und durch den oberen Kolben hindurch. Das flexible Verbindungselement ist vorzugsweise mittig am Träger sowie am Gegengewicht angeordnet, so daß ein horizontales Verschwenken des Trägers ohne Rückstellmoment ermöglicht wird.

Zur Vermeidung von Druckverlusten in Abhängigkeit von der Stellung des oberen Kolbens wird gemäß einer weiteren vorteilhaften Ausgestaltung der erfindungsgemäßen Trag- und Abziehvorrichtung vorgeschlagen, daß der obere Kolben und/oder der Deckel so ausgebildet ist bzw. sind, daß bei Anlage des oberen Kolbens an den Deckel eine die Öffnung des Kanals umgebende Dichtung gebildet wird. Vorzugsweise weist der Deckel und/oder der obere Kolben wenigstens ein Dichtungselement auf.

Da das flexible Verbindungselement sich durch den Deckel hindurch erstreckt, wird vorgeschlagen, daß der Deckel wenigstens eine das Verbindungselement umgebende Dichtung aufweist. Vorzugsweise ist die Dichtung schlauchförmig aus einem elastischen Material gebildet. Insbesondere wird vorgeschlagen, daß der Deckel eine ringförmige Aufnahme aufweist, deren Innenwandung durch die Dichtung gebildet ist, wobei die Aufnahme mit einem Fluid beaufschlagbar ist. Wird beispielsweise in der Aufnahme ein Unterdruck erzeugt, so kommt es zu einer Anlage der schlauchförmig ausgebildeten Dichtung an das flexible Verbindungselement, so daß eine Abdichtung erzielt wird. Diese Wirkung wird auch dann erreicht, wenn die Aufnahme mit einem Überdruck beaufschlagt wird. In einem solchen Fall wird das Dichtungselement gegen das flexible Verbindungselement gedrückt.

Gemäß einer noch weiteren vorteilhaften Ausgestaltung der Trag- und Abziehvorrichtung wird eine Steuereinheit, die Ventile aufweist, vorgeschlagen. Hierbei ist ein Ventil in einer Leitung angeordnet, die eine Hauptleitung mit dem oberen Fluidanschluß verbindet. Ein weiteres Ventil ist in einer Leitung angeordnet, die eine Hauptleitung mit dem unteren Fluidanschluß verbindet. Desweiteren ist ein Ventil in einer Leitung angeordnet, die die Hauptleitung mit dem mittleren Fluidanschluß verbindet. Die Hauptleitung ist mit unterschiedlichen Drücken beaufschlagbar. Hierdrunter werden nicht nur Drücke verstanden, die über dem Atmosphärendruck liegen, sondern auch Drücke, die unterhalb des Atmosphärendrucks liegen, so daß in der Hauptleitung ein Unterdruck vorliegt.

Weitere Vorteile und Einzelheiten des erfindungsgemäßen Verfahrens sowie der erfindungsgemäßen Trag- und Abziehvorrichtung werden anhand des in der Zeichnung dargestellen Ausführungsbeispiels erläutert. Es zeigen:
- Fig. 1: schematisch und im Schnitt ein Ausführungsbeispiel einer Trag-und Abziehvorrichtung in einer Stellung des oberen Kolbens, der eine Kraft F_{U} auf ein Gegengewicht ausübt,
- Fig. 2: im Schnitt einen Deckel,
- Fig. 3: die Trag- und Abziehvorrichtung nach Fig. 1, wobei die Kolben in einer Stellung dargestellt sind, die sie während der Hauptmelkphase einnehmen,
- Fig. 4: die Trag- und Abziehvorrichtung nach Fig. 1 in einer Stellung der Kolben während einer Nachmelkphase und
- Fig. 5: den Deckel mit einer Dichtung während der Nachmelkphase.

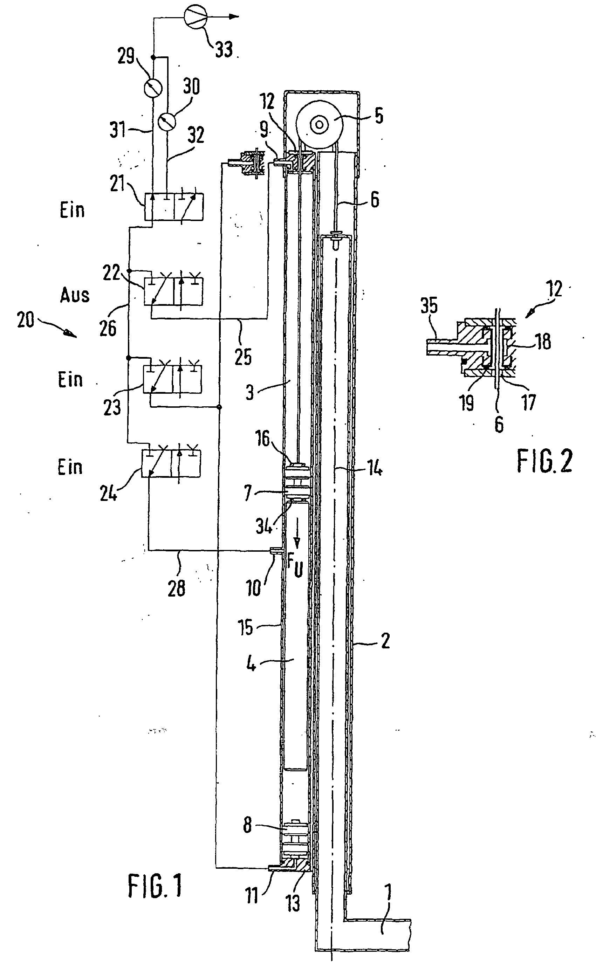

Fig. 1 zeigt schematisch eine Trag- und Abziehvorrichtung für Melkzeuge. Die Melkzeuge als solche sind nicht dargestellt Bei den Melkzeugen handelt es sich um an und für sich bekannte Melkzeuge.

Die Trag- und Abziehvorrichtung weist eine stationäre, vertikal verlaufende Hauptsäule 2 auf. Innerhalb der Hauptsäule 2 ist gleitend geführt ein Träger 1 angeordnet. Der Träger 1 dient zur Halterung des Melkzeugs. Der Träger 1 ist entlang einer Längsachse 14 der Hauptsäule bewegbar. Dieser ist auch um die Längsachse 14 verschwenkbar.

Mit dem Träger 1 ist ein Gegengewicht 4 verbunden. Das Gegengewicht 4 ist in einer zur Bewegungsrichtung des Trägers 1 entgegengesetzten, vertikalen Richtung bewegbar. Das Gegengewicht 4 und der Träger 1 sind mittels eines flexiblen Verbindungselementes 6 verbunden. Bei dem flexiblen Verbindungselement 6 handelt es sich vorzugsweise um ein Seil. Oberhalb der Hauptsäule 2 ist eine Rolle 5 drehbar gelagert, über die das flexible Element 6 geführt wird.

Das Gegengewicht 4 ist in einer Kammer 3 angeordnet Die Kammer 3 ist durch einen zylinderförmigen Körper 15, einen Deckel 12 und einen Boden 13 begrenzt. Oberhalb des Gegengewichts 4 ist ein oberer Kolben 7 angeordnet. Unterhalb des Gegengewichts 4 ist ein unterer Kolben 8 vorgesehen. Der obere Kolben 7 und der untere Kolben 8 sind unabhängig voneinander und relativ zueinander innerhalb der Kammer 3 bewegbar.

Die Kammer 3 weist einen oberen Fluidanschluß 9 auf. Wie aus der Fig. 1 ersichtlich ist, ist der Fluidanschluß 9 im Deckel 12 ausgebildet. Er hat eine Öffnung, die in einer Stirnseite des Deckels 12 ausgebildet ist. Im Boden 13 ist ein unterer Fluidanschluß 11 ausgebildet. Zwischen dem oberen und dem unteren Fluidanschluß 9, 11 ist ein weiterer Fluidanschluß 10 vorgesehen.

Der obere Kolben 7 weist eine nicht dargestellte Durchgangsöffnung auf, durch die sich das flexible Element 6 hindurch erstreckt. Auf der dem Deckel 12 zugewandten Stirnfläche des oberen Kolbens 7 ist ein im wesentlichen ringförmiges Dichtungselement 16 vorgesehen.

Fig. 2 zeigt vergrößert die Ausgestaltung des Deckels 12. Der Deckel 12 weist einen Durchgangskanal 17 auf, durch den sich das flexible Verbindungselement 6 hindurch erstreckt. Das Verbindungselement 6 erstreckt sich auch durch eine das Verbindungselement 6 umgebende Dichtung 19. Die Dichtung 19 ist schlauchförmig ausgebildet. Innerhalb des Deckels 12 ist eine ringförmige Aufnahme 18 vorgesehen, deren Innenwandung durch die Dichtung 19 gebildet ist Mit der Aufnahme 18 kommuniziert ein Leitungsanschluß 35, so daß die Aufnahme 18 mit einem Fluid beaufschlagbar ist.

Mit dem Bezugszeichen 20 ist eine Steuereinheit zur Steuerung eines Fluiddrucks in der Kammer 3 bezeichnet. Die Steuereinheit 20 weist mehrere Ventile 21 bis 24 auf Das Ventil 22 ist in einer Leitung 25 angeordnet. Diese Leitung 25 verbindet eine Hauptleitung 26 mit dem oberen Fluidanschluß 9. Das Ventil 23 ist in einer Leitung 27 angeordnet, die die Hauptleitung 26 mit dem unteren Fluidanschluß 11 sowie mit dem Leitungsanschluß 35 verbindet. Das weitere Ventil 24 verbindet die Hauptleitung 26 durch eine Leitung 28 mit dem mittleren Fluidanschluß 10.

In der Hauptleitung 26 ist das Ventil 21 angeordnet, durch welches die Hauptleitung 26 mit unterschiedlichen Drücken beaufschlagbar ist. Hierzu ist in Strömungsrichtung betrachtet vor dem Ventil 21 ein erstes Druckregelventil 29 und ein zweites Druckregelventil 30 vorgesehen, die jeweils in einer Leitung 31, 32 angeordnet sind. Die Leitungen 31, 32 sind mit einer Druckquelle 33 verbunden.

Zur physischen Entlastung der Melkperson wird durch den Kolben 7 auf das Gegengewicht 4 eine nach unten gerichtete Kraft F_{U} ausgeübt, so daß der Träger 1 mit dem Melkzeug nach oben verfahren wird. Die Kraft F_{U} wird dadurch erzeugt, daß das Ventil 21 eingeschaltet wird, so daß in der Hauptleitung 26 ein durch das Druckregelventil 30 voreingestellter Druck vorherrscht. Im dargestellten Ausführungsbeispiel liegt in der Hauptleitung 26 Unterdruck an. Das Ventil 22 ist geschlossen, so daß in der Kammer 3 oberhalb des oberen Kolbens 7 atmosphärischer Druck vorliegt. Das Ventil 23 ist eingeschaltet, so daß der in der Hauptleitung 26 herrschende Unterdruck über die Leitung 27 und den unteren Fluidanschluß 11 in die Kammer 3 eingeleitet wird, so daß der untere Kolben 8 seine in der Fig. 1 dargestellte Endstellung einnimmt. Durch die Leitung 27 herrscht auch in der Aufnahme 18 Unterdruck, so daß die schlauchförmige Dichtung 19 nicht an dem flexiblen Verbindungselement 6 anliegt Das flexible Verbindungselement 6 ist im wesentlichen reibungsfrei durch den Deckel hindurchführbar.

Das Ventil 24 ist eingeschaltet, so daß der in der Hauptleitung 26 herrschende Unterdruck über die Leitung 28 und den mittleren Fluidanschluß 10 in die Kammer 3 eingeleitet wird, wodurch der Kolben 7 nach unten gesaugt wird. Der Kolben 7 kommt dabei zur Anlage an das Gegengewicht 4. Er übt eine Kraft F_{U} auf das Gegengewicht 4 aus. Da sich das flexible Element 6 auch durch den oberen Kolben 7 hindurch erstreckt, weist dieser zur Vermeidung von Undichtigkeiten eine Dichtung 34 auf, die zur Anlage an eine Stirnseite des Gegengewichts 4 gelangt. Die Größe der Kraft F_{U} ist abhängig von dem in der Hauptleitung 26 über das Druckregelventil 30 eingestellten Unterdruck.

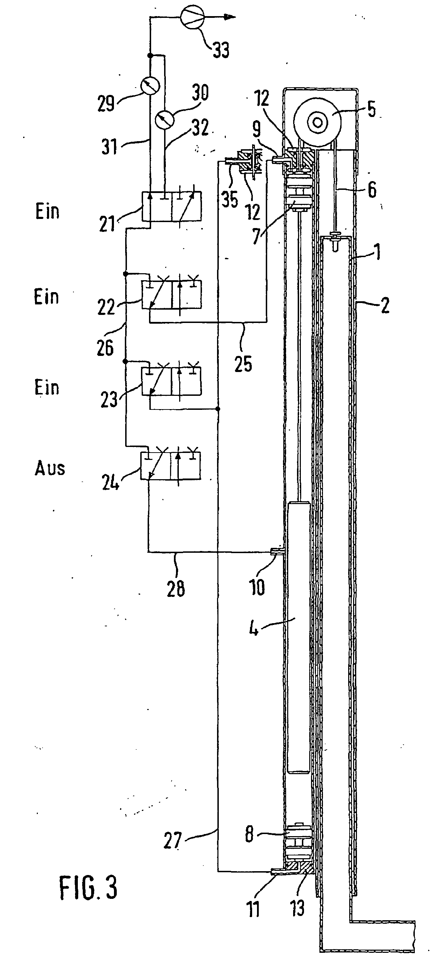

Erfolgte die Anbringung des Melkzeugs durch den Melker an die Zitzen des Tieres, so steuert die Steuereinheit 20 die Ventile entsprechend an. Fig. 3 zeigt eine Momentanaufnahme, die während der Hauptmelkphase vorherrscht. Während dieser Hauptmelkphase üben die Kolben 7, 8 keine Kraft auf das Gegengewicht 4 aus. Der prinzipielle Aufbau der in der Fig. 3 dargestellten Trag- und Abziehvorrichtung entspricht dem Aufbau der Trag- und Abziehvorrichtung nach Fig. 1.

Während der Hauptmelkphase wird eine freie Beweglichkeit des Gegengewichts 4 zugelassen. Dies wird dadurch erreicht, daß der obere Kolben 7 seine obere Endposition, wie sie in der Fig. 3 dargestellt ist, einnimmt. Der untere Kolben 8 befindet sich weiterhin in seiner unteren Endposition.

Zum Überführen des Kolbens 7 aus der Stellung, in der er an dem Gegengewicht 4 anliegt in die in der Fig. 3 dargestellte Stellung, wird das Ventil 22 geöffnet und das Ventil 24 geschlossen. Durch die Öffnung des Ventils 22 wird Unterdruck über die Leitung 25 und den oberen Fluidanschluß 9 Unterdruck in der Kammer 3 angelegt. Da an dem Fluidanschluß 10 nun kein Unterdruck herrscht, sondern Atmosphärendruck, wird der obere Kolben 7 von dem Gegengewicht 4 weg nach oben in die obere Endposition verfahren. In der oberen Endposition des oberen Kolbens 7 liegt das Dichtungselement 16 an der Stirnseite des Deckels 12 an, so daß eine Abdichtung gegenüber der Umgebungsatmosphäre erreicht wird.

Während des Verfahrwegs des oberen Kolbens 7 bleibt die Dichtung des Verbindungselementes 6 geöffnet, wodurch eine gewisse Leckage vorliegt, die jedoch so gering ist, daß sie in Kauf genommen wird. Diese Leckage kann jedoch dadurch vermieden werden, daß während des Verfahrwegs des Kolbens 7 Atmosphärendruck in der Aufnahme 18 vorliegt, so daß das Dichtungselement 19 an dem Verbindungselement 6 anliegt. Hat der obere Kolben 7 seine obere Endposition erreicht, so kann wieder Unterdruck in der Aufnahme 18 vorliegen, so daß das Dichtungselement 19 das Verbindungselement 6 freigibt.

Erfolgt während der Hauptmelkphase eine Bewegung des Tieres, die über das Melkzeug auf den Träger 1 übertragen wird, so kann sich das Gegengewicht 4 frei bewegen, da weder der obere Kolben 7 noch der untere Kolben 8 auf das Gegengewicht einwirkt.

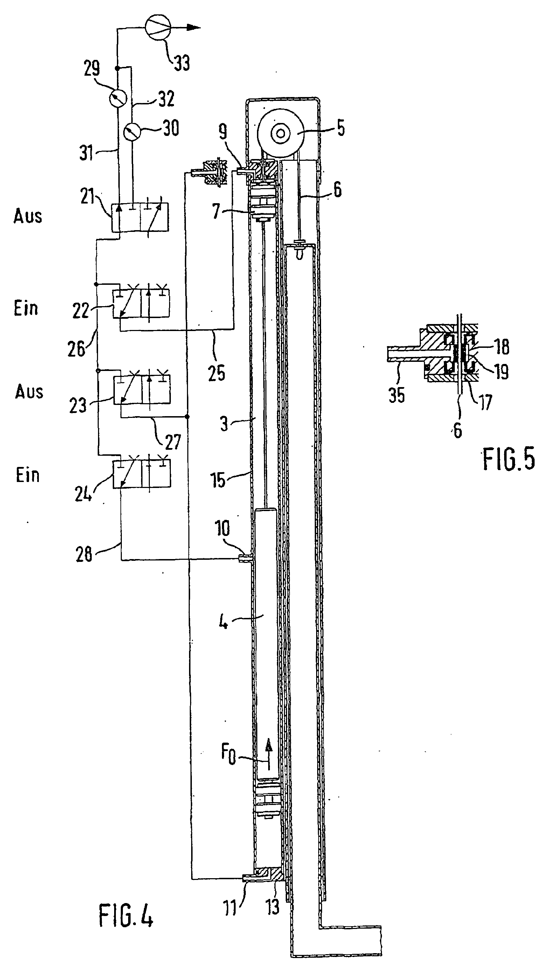

Ist die Hauptmelkphase beendet und die Nachmelkphase eingeleitet, so wird durch den unteren Kolben 8 auf das Gegengewicht 4 eine Kraft F_{O} ausgeübt, wodurch das Gegengewicht 4 nach oben hin verschoben wird. Dies hat zur Folge, daß sich der Träger 1 nach unten hin bewegt und eine Zugkraft auf das Melkzeug ausübt, so daß die Melkbecher des Melkzeugs nicht auf den Zitzen hochwandern. Diese Situation ist in der Fig. 4 dargestellt. Das Ventil 21 ist hierbei ausgeschaltet, so daß die Hauptleitung 26 mit der Leitung 31 verbunden ist, in der der durch das Druckregelventil 29 eingestellte Unterdruck herrscht. Das Ventil 22 ist weiterhin eingeschaltet. Der obere Kolben 7 verbleibt in seiner oberen Endposition. Das Ventil 23 ist ausgeschaltet, so daß über den unteren Fluidanschluß 11 Atmosphärendruck vorliegt. Atmosphärendruck liegt auch in der Aufnahme 18 des Deckels, so daß die Dichtung 19 an dem flexiblen Verbindungselement 6 anliegt.

Das Ventil 24 ist eingeschaltet, so daß durch den Fluidanschluß 10 Unterdruck in der Kammer 3 anliegt. Hierdurch wird der Kolben 8 nach oben hin bewegt. Er liegt an dem Gegengewicht 4 an und drückt dieses nach oben, so daß der Träger 1 sich nach unten bewegt.

### Bezugszeichenliste:

- 1: Träger
- 2: Hauptsäule
- 3: Kammer
- 4: Gegengewicht
- 5: Rolle
- 6: Verbindungselement
- 7: oberer Kolben
- 8: unterer Kolben
- 9, 10, 11: Fluidanschluß
- 12: Deckel
- 13: Boden
- 14: Längsachse
- 15: Körper
- 16: Dichtungselement
- 17: Kanal
- 18: Aufnahme
- 19: Dichtung
- 20: Steuereinheit
- 21- 24: Ventile
- 25: Leitung
- 26: Hauptleitung
- 27,28: Leitung
- 29,30: Druckregelventil
- 31,32: Leitung
- 33: Druckquelle
- 34: Dichtung

## Patentansprüche

1. Verfahren zum Betätigen einer Trag- und Abziehvorrichtung für Melkzeuge mit einer stationären, vertikalen Hauptsäule (2),
einem Träger (1) zur Halterung des Melkzeugs, wobei der Träger (1) entlang einer Längsachse (14) der Hauptsäule (2) bewegbar und um diese verschwenkbar ist und mit einem Gegengewicht (4), das mit dem Träger (1) verbunden und in einer zur Bewegungsrichtung des Trägers (1) entgegengesetzten Richtung bewegbar ist,
bei dem zum Ansetzen des Melkzeugs auf das Gegengewicht (4) eine nach unten gerichtete Zusatzkraft (F_{U}), während einer Hauptmelkphase auf das Gegengewicht (4) keine Zusatzkraft und wenigstens während einer Nachmelkphase auf das Gegengewicht (4) eine nach oben gerichtete Zusatzkraft (F_{O}) einwirkt.

2. Verfahren nach Anspruch 1, bei dem die nach unten und/oder nach oben gerichtete Kraft (F_{U}, F_{O}) durch die Einwirkung wenigstens eines pneumatisch betätigbaren Kolbens (7, 8) erzeugt wird.

3. Verfahren nach Anspruch 2, bei dem die nach unten gerichtete Kraft (F_{U}) durch die Einwirkung eines oberen pneumatisch betätigbarem Kolbens (7) und die nach oben gerichtete Kraft (Fo) durch die Einwirkung eines unteren pneumatisch betätigbaren Kolbens (8) erzeugt wird.

4. Verfahren nach Anspruch 3, bei dem der obere Kolben (7) und der untere Kolben (8) unabhängig voneinander betätigbar sind.

5. Verfahren nach Anspruch 3 oder 4, bei dem der obere Kolben (7) in eine obere Endposition und der untere Kolben (8) in eine untere Endposition verfahrbar sind, so daß in den Endpositionen das Gegengewicht (4) wirkverbindungsfrei mit den Kolben (7, 8) ist.

6. Trag- und Abziehvorrichtung für Melkzeuge mit
einer stationären vertikalen Hauptsäule (2),
einem Träger (1) zur Halterung des Melkzeugs, wobei der Träger (1) entlang einer Längsachse (14) der Hauptsäule (2) bewegbar und um diese verschwenkbar ist und mit
einem Gegengewicht (4), das mit dem Träger (1) verbunden und in einer zur Bewegungsrichtung des Trägers (1) entgegengesetzten Richtung bewegbar ist,
**gekennzeichnet durch** eine Kammer (3) mit einem oberen (9), einem unteren (11) und einem zwischen dem oberen und dem unteren liegenden Fluidanschluß (10), in der das Gegengewicht (4) angeordnet ist, das Gegengewicht (4) zwischen einem oberen (7) und einem unteren (8) Kolben angeordnet ist, sowie **durch** eine Steuereinheit (20) zur Steuerung eines Fluiddrucks in der Kammer (3).

7. Trag- und Abziehvorrichtung nach Anspruch 6, **dadurch gekennzeichnet, daß** ein flexibles Verbindungselement (6) vorgesehen ist, das das Gegengewicht (4) mit dem Träger (1) verbindet, daß sich das Verbindungselement (6) durch einen Kanal (17) im Deckel (12) der Kammer (3) und durch den oberen Kolben (7) hindurch erstreckt.

8. Trag- und Abziehvorrichtung nach Anspruch 7, **dadurch gekennzeichnet, daß** der obere Kolben (7) und/oder der Deckel (12) so ausgebildet ist bzw. sind, daß bei Anlage des oberen Kolbens (7) an den Deckel (12) eine die Öffnung des Kanals (17) umgebende Dichtung gebildet wird.

9. Trag- und Abzieheinrichtung nach Anspruch 8, **dadurch gekennzeichnet, daß** der Deckel (12) und/oder der obere Kolben (7) wenigstens ein Dichtungselement (16) aufweist.

10. Trag- und Abziehvorrichtung nach Anspruch 7, 8 oder 9, **dadurch gekennzeichnet, daß** der Deckel (12) wenigstens eine das Verbindungselement (6) umgebende Dichtung (19) aufweist.

11. Trag- und Abziehvorrichtung nach Anspruch 10, **dadurch gekennzeichnet, daß** die Dichtung (19) schlauchförmig aus einem elastischen Material gebildet ist.

12. Trag- und Abziehvorrichtung nach Anspruch 11, **dadurch gekennzeichnet, daß** der Deckel (12) eine ringförmige Aufnahme (18) aufweist, deren Innenwandung durch die Dichtung (19) gebildet ist, wobei die Aufnahme (18) mit einem Fluid beaufschlagbar ist.

13. Trag- und Abziehvorrichtung nach einem der Ansprüche 7 bis 12, **dadurch gekennzeichnet, daß** die Steuereinheit (20) Ventile (21-24) aufweist, wobei das Ventil (22) in einer Leitung (25) angeordnet, die eine Hauptleitung (26) mit dem oberen Fluidanschluß (9) verbindet, das Ventil (23) in einer Leitung (27) angeordnet, die eine Hauptleitung (26) mit dem unteren Fluidanschluß (11) verbindet, und das Ventil (24) in einer Leitung (28) angeordnet, die eine Hauptleitung (26) mit dem mittleren Fluidanschluß (10) verbindet und wobei die Hautleitung (26) mit unterschiedlichen Drücken beaufschlagbar ist.

14. Trag- und Abziehvorrichtung nach Anspruch 13, **dadurch gekennzeichnet, daß** die Leitung (27) zusätzlich zu dem unteren Anschluß (11) auch mit der Aufnahme (18) verbunden ist.

## Claims

1. Process for the actuation of a carrying and withdrawing device for milking units having a stationary, vertical main column (2), a carrier (1) for holding the milking unit, wherein the carrier (1) can be moved along a longitudinal axis (14) of the main column (2) and can be pivoted about the longitudinal axis and having a counterweight (4), which is connected to the carrier (1) and can be moved in a direction opposite to the direction of motion of the carrier (1), wherein for the attachment of the milking unit a downwardly directed additional force (Fu) is acting on the counterweight (4), during a primary milking phase no additional force is acting on the counterweight (4) and during at least one secondary milking phase an upwardly directed additional force (Fo) is acting on the counterweight (4).

2. Process according to claim 1, wherein the downwardly and/or the upwardly directed force (Fu, Fo) is produced by acting upon at least one piston (7, 8) that can be actuated pneumatically.

3. Process according to claim 2, wherein the downwardly directed force (Fu) is produced by the action of an upper piston (7) that can be actuated pneumatically and the upwardly directed force (Fo) by the action of a lower piston (8) that can be actuated pneumatically.

4. Process according to claim 3, wherein the upper piston (7) and the lower piston (8) can be actuated independently of each other.

5. Process according to claim 3 or 4, wherein the upper piston (7) can be traversed in an upper final position and the lower piston (8) can be traversed in a lower final position, so that in the final positions the counterweight (4) is free of effective connection to the pistons (7, 8).

6. Carrying and withdrawing device for milking units, comprising a stationary vertical main column (2), a carrier (1) for holding the milking unit, wherein the carrier (1) can be moved along a longitudinal axis (14) of the main column (2) and can be pivoted about the longitudinal axis, and a counterweight (4) that is connected to the carrier (1) and can be moved in a direction opposite to the direction of motion of the carrier (1), **characterized by** a chamber (3) having an upper fluid connection (9), a lower fluid connection (11), and a fluid connection (10) lying between the upper and the lower fluid connection, in which the counterweight (4) is disposed, the counterweight (4) being disposed between an upper (7) and a lower (8) piston, as well as by a control unit (20) for controlling a fluid pressure in the chamber (3).

7. Carrying and withdrawing device according to claim 6, **characterized in that** there is provided a flexible connecting element (6) that connects the counterweight (4) to the carrier (1) and wherein the connecting element (6) extends through a channel (17) in the cover (12) of the chamber (3) and through the upper piston (7).

8. Carrying and withdrawing device according to claim 7, **characterized in that** the upper piston (7) and/or the cover (12) are/is formed so that when the upper piston (7) lies on the cover (12) a seal encircling the opening of the channel (17) is formed.

9. Carrying and withdrawing device according to claim 8, **characterized in that** the cover (12) and/or the upper piston (7) have/has at least one sealing element (16).

10. Carrying and withdrawing device according to claim 7, 8 or 9, **characterized in that** the cover (12) has at least one seal (19) encircling the connecting element (6).

11. Carrying and withdrawing device according to claim 10, **characterized in that** the seal (19) is constructed in the form of a tube from an elastic material.

12. Carrying and withdrawing device according to claim 11, **characterized in that** the cover (12) has an annular receiving space (18), whose inner wall is formed by the seal (19), wherein the receiving space (18) can be pressurized by a fluid.

13. Carrying and withdrawing device according to one of claims 7 to 12, **characterized in that** the control unit (20) comprises valves (21-24), wherein the valve (22) is disposed in a line (25), which connects a main line (26) to the upper fluid connection (9), wherein the valve (23) is disposed in a line (27), which connects a main line (26) to the lower fluid connection (11), and the valve (24) is disposed in a line (28), which connects a main line (26) to the middle fluid connection (10) and wherein the main line (26) can be pressurized at different pressures.

14. Carrying and withdrawing device according to claim 13, **characterized in that** additionally to the lower connection (11) the line (27) is further connected to the receiving space (18).

## Revendications

1. Procédé pour actionner un dispositif de support et de retrait pour des faisceaux trayeurs avec une colonne principale stationnaire, verticale (2), un support (1) pour maintenir le faisceau trayeur, dans quel cas le support (1) est amovible le long d'un axe longitudinal (14) de la colonne principale (2) et peut être pivoté autour de celui-ci, et avec un contrepoids (4) qui est relié au support (1) et qui est amovible dans une direction qui est opposée à la direction de mouvement du support (1), procédé dans lequel pour appliquer le faisceau trayeur une force supplémentaire (Fu) dirigée vers le bas agit sur le contrepoids (4), durant une phase de traite principale il n'existe pas de force supplémentaire qui agit sur le contrepoids (4) et au moins durant une phase de traite additionnelle une force supplémentaire (Fo) dirigée vers le haut agit sur le contrepoids (4).

2. Procédé selon la revendication 1, dans lequel la force dirigée vers le bas et/ou la force dirigée vers le haut (Fu, Fo) est engendrée par l'action d'au moins un piston (7, 8) qui peut être actionné de façon pneumatique.

3. Procédé selon la revendication 2, dans lequel la force dirigée vers le bas (Fu) est engendrée par l'action d'un piston supérieur (7) pouvant être actionné de façon pneumatique et la force dirigée vers le haut (Fo) est engendrée par l'action d'un piston inférieur (8) pouvant être actionné de façon pneumatique.

4. Procédé selon la revendication 3, dans lequel le piston supérieur (7) et le piston inférieur (8) peuvent être actionnés indépendamment l'un de l'autre.

5. Procédé selon la revendication 3 ou 4, dans lequel le piston supérieur (7) est déplaçable dans une position d'extrémité supérieure et le piston inférieur (8) est déplaçable dans une position d'extrémité inférieure, de sorte que dans les positions d'extrémité le contrepoids (4) n'est pas en liaison effective avec le piston (7, 8).

6. Dispositif de support et de retrait pour des faisceaux trayeurs avec une colonne principale stationnaire, verticale (2), un support (1) pour maintenir le faisceau trayeur, dans quel cas le support (1) est amovible le long d'un axe longitudinal (14) de la colonne principale (2) et peut être pivoté autour de celui-ci, et avec un contrepoids (4) qui est relié au support (1) et qui est amovible dans une direction qui est opposée à la direction de mouvement du support (1), **caractérisé par** une chambre (3) avec une connexion de fluide supérieure (9), inférieure (11) et une connexion de fluide (10) se trouvant entre la connexion de fluide supérieure et inférieure, chambre, dans laquelle le contrepoids (4) est agencé, le contrepoids (4) est agencé entre un piston supérieur (7) et un piston inférieur (8), ainsi que par une unité de commande (20) pour commander une pression de fluide dans la chambre (3).

7. Dispositif de support et de retrait selon la revendication 6, **caractérisé en ce qu'**on a prévu un élément de liaison flexible (6) qui relie le contrepoids (4) au support (1), **en ce que** l'élément de liaison (6) s'étend à travers un canal (17) dans le couvercle (12) de la chambre (3) et à travers le piston supérieur (7).

8. Dispositif de support et de retrait selon la revendication 7, **caractérisé en ce que** le piston supérieur (7) et/ou le couvercle (12) est, respectivement sont, réalisé(s) de manière telle que lorsque le piston supérieur (7) s'applique contre le couvercle (12) une étanchéisation est formée entourant l'ouverture du canal (17).

9. Dispositif de support et de retrait selon la revendication 8, **caractérisé en ce que** le couvercle (12) et/ou le piston supérieur (7) a au moins un élément d'étanchéisation (16).

10. Dispositif de support et de retrait selon la revendication 7, 8 ou 9, **caractérisé en ce que** le couvercle (12) a au moins un joint d'étanchéité (19) qui entoure l'élément de liaison (6).

11. Dispositif de support et de retrait selon la revendication 10, **caractérisé en ce que** le joint d'étanchéité (19) est réalisé en forme de tuyau flexible d'un matériau élastique.

12. Dispositif de support et de retrait selon 1a revendication 11, **caractérisé en ce que** le couvercle (12) a un logement annulaire (18), dont la paroi intérieure est formée par le joint d'étanchéité (19), le logement (18) pouvant être soumis à l'action d'un fluide.

13. Dispositif de support et de retrait selon l'une des revendications 7 à 12, **caractérisé en ce que** l'unité de commande (20) a des valves (21-24), dans quel cas la valve (22) est agencée dans une conduite (25) qui relie une conduite principale (26) à la connexion de fluide supérieure (9), la valve (23) est agencée dans une conduite (27) qui relie une conduite principale (26) à la connexion de fluide inférieure (11) et la valve (24) est agencée dans une conduite (28) qui relie une conduite principale (26) à la connexion de fluide intermédiaire (10) et la conduite principale (26) peut être soumise à des pressions différentes.

14. Dispositif de support et de retrait selon la revendication 13, **caractérisé en ce qu'**en outre à la connexion inférieure (11) la conduite (27) est aussi reliée au logement(18).
